# EUROPEAN PATENT SPECIFICATION

(11) **EP 2 083 199 B1**
(45) Date of publication and mention of the grant of the patent: **07.11.2018**
(21) Application number: 08460004.8
(22) Date of filing: 22.01.2008
(51) Int. Cl.: F16H 61/30

(54) **Gear shifting system**
Getriebeschaltsystem
Système de changement de vitesse

(43) Date of publication of application: 29.07.2009
(73) Proprietor: Eaton Intelligent Power Limited, 4 Dublin (IE)
(72) Inventor: Kogut, Jakub Adam, 81-166 Gdynia (PL); Andrzejak, Grzegorz Stanislaw, 06-400 Ciechanow (PL)
(74) Representative: Eaton IP Group EMEA

(56) References cited:
- DE-A1- 19 839 850
- DE-A1- 19 839 855
- GB-A- 1 575 573
- JP-A- 61 236 954

## Description

### Background of the Invention

### 1. Field of the Invention

The present invention relates to a gear shifting system for a change gear transmission having means for engaging and disengaging a selected gear ratio.

### 2. Description of the Prior Art

Gear shifting systems or assemblies for a mechanical change gear transmission comprising a plurality of generally parallel, independently axially moveable shift rails to be selected and axially moved to effect engagement/disengagement of a particular gear ratio are well-known in the prior art, as may be seen by reference to US Pat. Nos. 2,951,392; 4,455,883; 4,575,029; 4,567,85; 4,588,895; 4,104,929 and US patent application/publication 2005/0155446 A1.

Typically, such gear shifting assemblies include a shift finger fixed to a directly mounted shift lever or to a cross-shaft or shift-shaft of a remotely controlled shifting mechanism. The cross-shaft or shift-shaft of the remotely controlled shifting mechanism extends across the shift rails. For selecting a shift rail, and thereby a gear ratio, the cross- or shift-shaft is axially moved in X-X-direction (cross-gate-travel). For axially moving the shift rail, selected by the shift finger of the cross- or shift-shaft, the cross- or shift-shaft is rotated (into gear direction or Y-Y direction). Hence, an X-Y- type shifting system is formed. The cross- or shift-shaft may be shifted in axial direction by first actuator means to select a gear ratio to be engaged or disengaged and be rotated about its longitudinal axis by second actuator means to engage or disengage a selected gear ratio. Said actuator means may comprise pneumatic or hydraulic actuators.

Well-known in the prior art are gear shifting systems having actuator means operatively coupled to the cross- or shift-shaft to rotate the same about its longitudinal axis to engage or disengage a selected gear ratio that include shift actuator means connected to an actuating rod having a longitudinal axis and slidingly received in a tube-like shifting rod. In order to reduce the effort required to shift the activating rod to effect a gear ratio change in the transmission, a fluid operated power assist servo unit is operatively interposed between the actuator rod and the shifting rod, the shifting rod being coupled with the cross- or shift-shaft to rotate the same about its longitudinal axis in response to an axial movement of said shifting rod. The power assist servo unit (booster) and the means for supporting the shifting rod and the actuating rod are enclosed in a housing that is mounted on the transmission casing. Examples for this state of the prior art are disclosed in JP patent publications nos. 08240265A and 09.292020. The actuating rod of these systems is directly coupled, through a linkage, with a gearshift lever operated by the driver of the vehicle. Instead of directly coupling the actuating rod with a manually operated gear shift lever it is also known to use remotely controlled fluid operated shift actuator means that are attached to the housing enclosing and supporting the shifting rod and the actuating rod. The actuating rod is provided with a flange for separable engagement of the shift actuator means. Such a gear system comprising all the features of the preamble of claim 1 is known from DE 198 39 855 A1. It is an object of the present invention to improve this state of the prior art and to provide a gear shifting system for a change gear transmission that enjoys a high degree of reliability, and that is cost-effective.

### Summary of the Invention

To attain this object the gear shifting system according to the invention comprises the features of claim 1.

In the gear shifting system according to the invention shift actuator means are associated with a housing enclosing the power assist servo unit and the means for supporting the shifting rod and the actuating rod, and the actuator rod is non-releasably operatively connected with said shift actuator means.

In a preferred embodiment the actuator rod is connected with the shift actuator means through a non-releasable lock ring connection in the form of a circlip or snap ring connection. The lock ring connection may comprise a tenon-like element and a cup- or tube-shaped element configured to fit over the tenon-like element and a radially deformable resilient circlip received in a circumferential groove in one of said elements and non-releasably engaging groove means on the other of said elements. The lock ring connection allows for a certain degree of misalignment between the actuating rod and the shift actuator means, and it is easy to manufacture while it guarantees a reliable, easy to assemble, non-releasable connection at the interface between the shift actuator means and the actuating rod.

In a further embodiment the second actuator means that is operatively coupled to the shift-shaft to rotate the same to engage or disengage a selected gear ratio may comprise a detent means to releasably arrest the actuating rod in a preferred position with respect to said housing. Generally, the preferred position of the actuating rod is a neutral or rest position of the actuating rod. The detent means gives the driver a better feeling at the gear ratio change lever when he begins to engage or disengage a gear ratio because it provides a perceptible effect on the gearshift lever knob in an initial stage of a gear ratio engagement/disengagement. This is helpful e.g. when the gear lever knob movement is jerky or imprecise due to the power assist servo unit.

In a preferred embodiment the detent means is interposed between the shift actuator means and the actuating rod and is located within a housing of the shift actuator means, or in the housing enclosing the power assist servo unit or in a separate adapter housing that is arranged between the shift actuator means and the housing enclosing the power assist servo unit. The before mentioned lock ring connection may be provided between the shift actuator means and a part of the detent means that is connected with the actuator rod.

### Brief Description of the Drawings

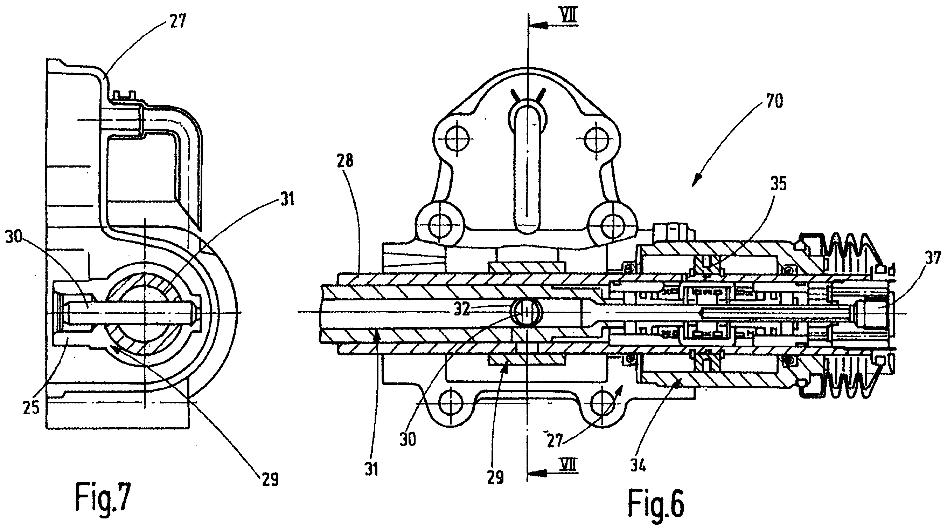

Fig. 1 illustrates a gear shifting system according to the invention mounted on a change gear transmission, with the remote gear ratio change selector means omitted, in a top view;
Fig. 2 shows the gear shifting system in figure 1, in-eluding a gear ratio change selector means, in a perspective view;
Fig. 3 shows a cross- or shift-shaft, the shifting rod and the shift actuator means of the gear shifting system in figure 2, in a partial perspective view,
Fig. 4 is a schematic representation of the gear ratio change selector means of the gear shifting system in figure 2;
Fig. 5 is a schematic representation of the kinematics of the gear shifting system in figure 2;
Fig. 6 is a sectional view of the second actuator means of the gear shifting system in figure 2, seen in the direction of the arrows VI-VI,
Fig. 7 is a sectional view of the assembly in figure 6 seen in the direction of the arrows VII-VII,
Figs. 8
   to 10 show a part of the power assist servo unit in figure 6, illustrating three different operating conditions;

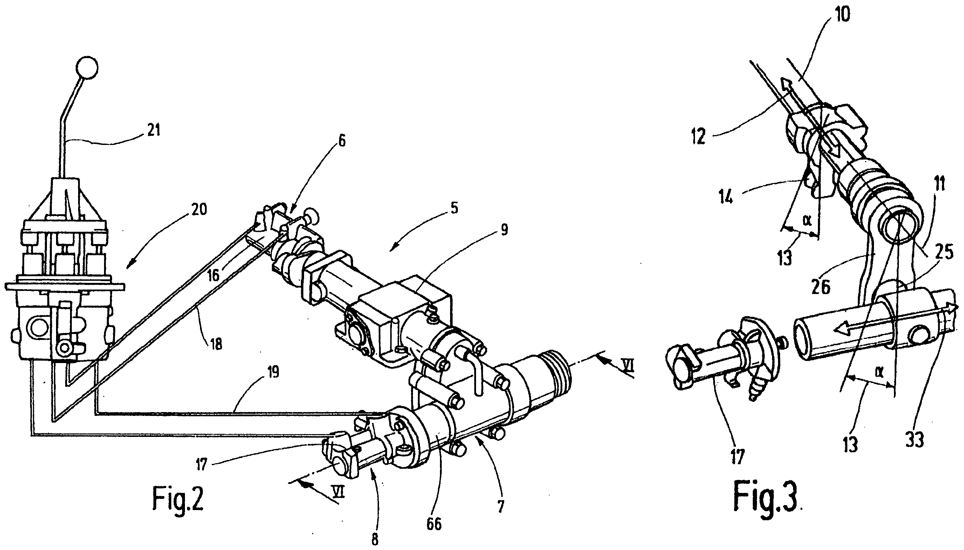

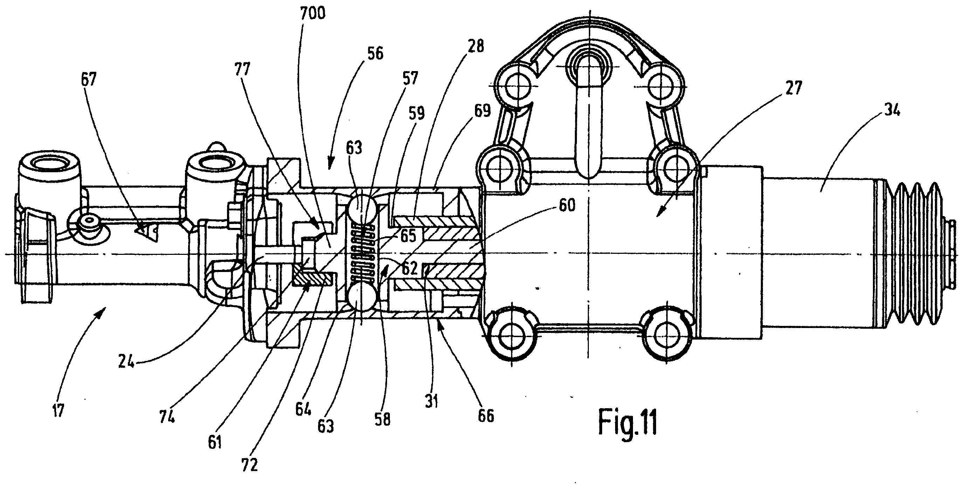

Fig. 11 shows the second actuator means of the gear shifting system in figure 2, partially in a sectional view and partially in a lateral view, to illustrate the interface between the actuating rod and the shift actuator means;

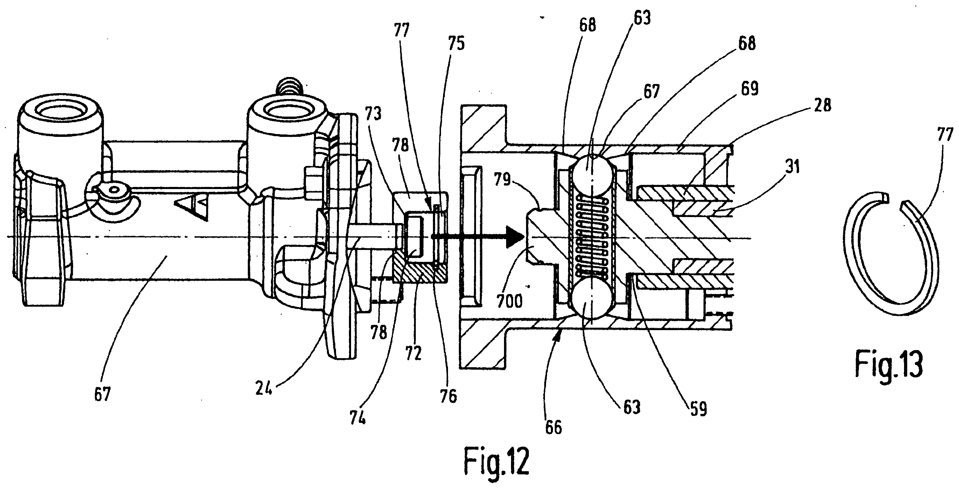

Fig. 12 illustrates a portion of the second actuator means in figure 11 with the shift actuator means disassembled from the actuating rod, in a view similar to figure 11;
Fig. 13 is a prospective illustration of a circlip used in the assemblies in figures 11 and 12;

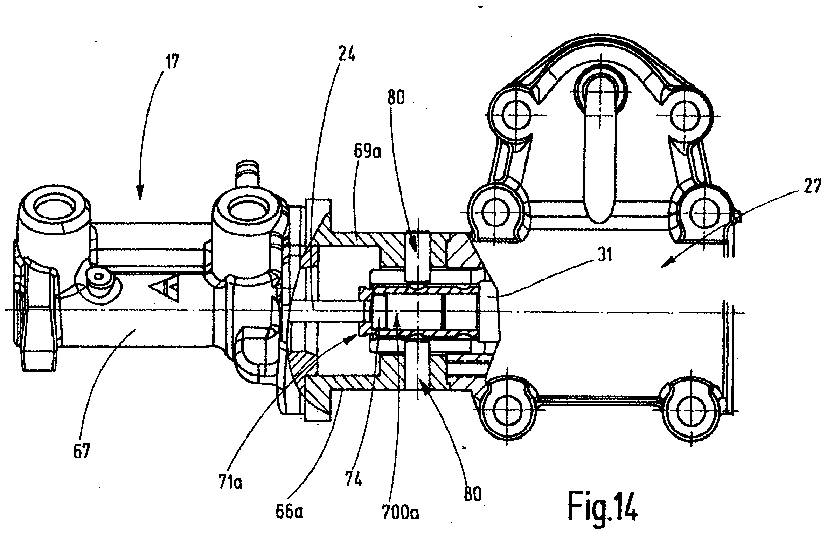

Fig. 14 shows another embodiment of the second actuator means of the gear shifting system in figure 2 in a representation similar to that in figure 11, but with a part of power assist servo unit omitted;

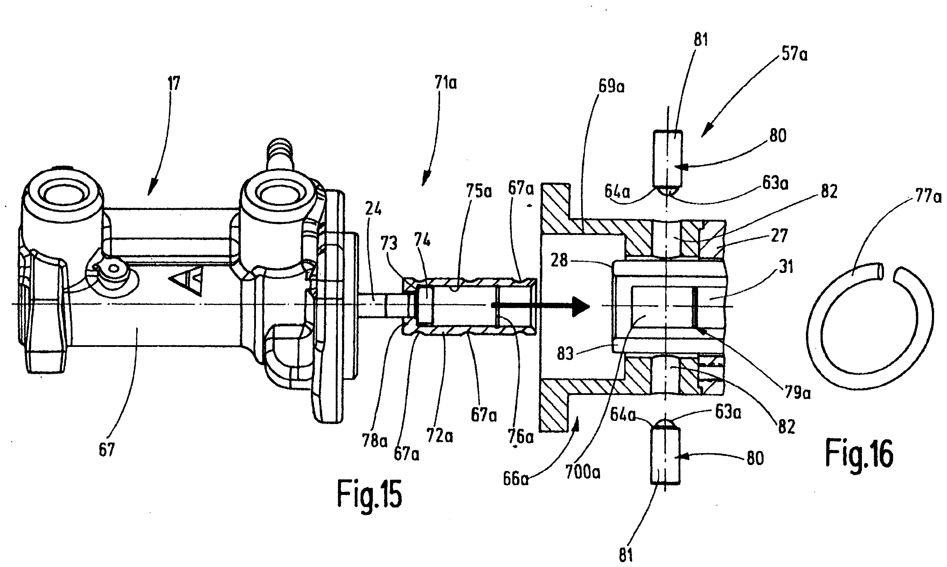

Fig. 15 shows the assembly of figure 14 with the shift actuator means disassembled from the actuating rod in a view similar to fig. 12, and
Fig. 16 is a prospective representation of a snap ring used in the assembly in figure 15.

### Description of Preferred Embodiments

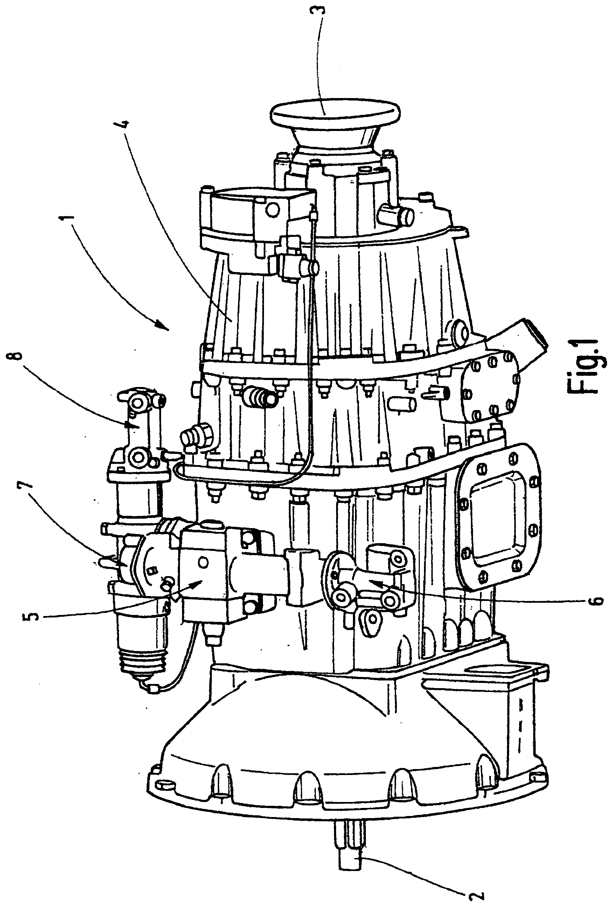

A transmission 1 with an input shaft 2, an output shaft 3 and a transmission housing 4 is represented in figure 1. A gear shifting system in the form of an X-Y-actuation unit 5 is provided on the transmission housing 4 which has first actuator means 6, as the X-X-drive, to select the gear ratio to be engaged or disengaged, and second actuator means 7, as the Y-Y-drive, to engage or disengage a selected gear ratio. The second actuator means 7 comprises shift actuator means 8 associated therewith.

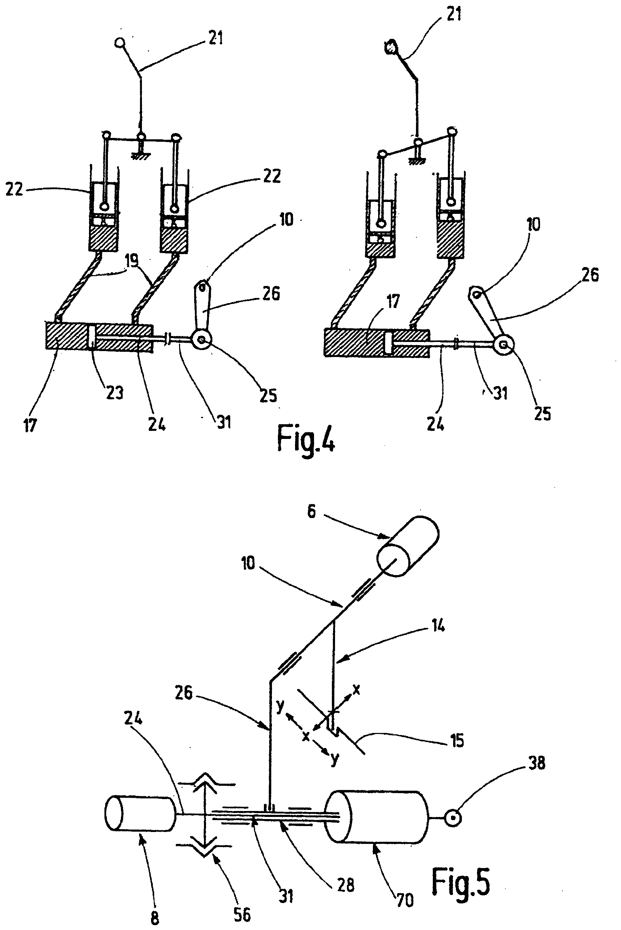

The actuator unit 5 comprises an elongate housing 9, best shown in figure 2, in which a cross- or shift-shaft 10 having a longitudinal axis 11 (see figure 3) is mounted that is shiftable in an axial direction, as this is indicated by arrows 12 in figure 3, and that is rotatable about its longitudinal axis 11, as this is indicated by arrows 13. An operating means in the form of a shift finger 14 is mounted on and secured to the shift-shaft 10. The shift finger 14 is adapted to engage shift rails in the transmission 1, as this is schematically shown in the kinematics scheme in figure 5 where one of the shift rails is indicated at 15.

The first actuator means 6 comprise a double acting hydraulic cylinder 16 that is fastened to the housing 9 and which has a piston rod (not visible in figure 2) that is coaxial to and connected with the shift-shaft 10. The shift actuator means 8 of the second actuator means 7 comprises a double acting hydraulic cylinder 17 that is bolted to a coaxial adapter housing 66 which is attached to a housing 27 enclosing a pneumatically operated power assist servo unit of the second actuator means 7. The hydraulic cylinders 16 and 17 are connected through lines 18 and 19 to a remote fluid control unit 20 comprising a gear change lever 21 that is adapted to be operated by the driver of a vehicle. As shown in figure 4, the hydraulic fluid in the circuit including the cylinders 16, 17 and the lines 18, 19 is pressurized by two cylinders 22 for each of the cylinders 16, 17. The cylinders 22 are comprised in the remote fluid control unit 20 and operated in a way that may be easily understood from the schematic illustration in figure 4: Moving the pivotally supported gear change lever 21 in one direction will cause a piston 23 in the double acting cylinder 17 to push forward (or to retract) its piston rod 24 for example. The piston rod 24 of the cylinder 17 is coupled through a trunnion 25 to a connecting lever 26 which is fastened to the shift-shaft 10, as this is shown in more detail in figures 3. The double acting cylinder 16 is operated in a similar way with its piston rod (not shown) being directly connected with the shift-shaft 10.

Figures 6 and 7 show a power assist servo unit 70 of the actuator means 7 in more detail. The unit 70 comprises a housing 27 that is bolted to the housing 9 enclosing the shift-shaft 10. Within the housing 27 a tube-like shifting rod 28 is mounted that is moveable in an axial direction. It carries a bushing 29 that is integrally formed with the protruding trunnion 25 that engages the connecting lever 26 as this is shown in figure 3. The bushing 29 is fastened to the shifting rod 28 by means of a transverse pin 30.

Within the shifting rod 28 a cylindrical actuating rod 31 is located that is shiftable with respect to the shifting rod 28 in an axial direction and to a extent that is limited by an oblong bore 32 through which the transverse pin 30 passes. The actuating rod 31 is connected with the piston rod 24 of the double acting hydraulic cylinder 17 of the shift actuator means 8 as this will be explained below in further detail.

The fluid operated power assist servo unit 70 of the second actuator means 7 is operatively interposed between the actuating rod 31 and the shifting rod 28 to exert an amplified axially directed actuating force on the shifting rod 28 in response to an axially directed actuating force exerted on the actuating rod 31 by the piston rod 24 of the double acting hydraulic cylinder 17 of the shift actuator means 8.

The kinematics of the gear shifting system thus far described above are schematically illustrated in figure 5 where similar reference numbers are used for elements already described in connection with figures 1 to 7. When the shift actuator means 8, through its double acting fluid cylinder 17, transmit an axially directed shifting force to the actuating rod 31, this actuating or shifting force will be directly transmitted, without amplification, to the shifting rod 28 and through the connecting lever 26 to the shift rod 10 to rotate the same if there is no significant resistance against a rotation of the shift rod 10. If, however, there is a considerable resistance against an axial movement of the actuating rod 31, due to operating conditions of the gear change mechanism in the transmission 1, the power assist servo unit 70 will be activated and cause an amplified actuating force to be transmitted to the connecting lever 26 that is greater than the actuating force exerted on the actuating rod 31. In any event however, the shift-shaft 10 will be rotated in response to an activation of the shift gear actuator means 8 thereby moving a selected shift rail 15 in the Y-Y-direction.

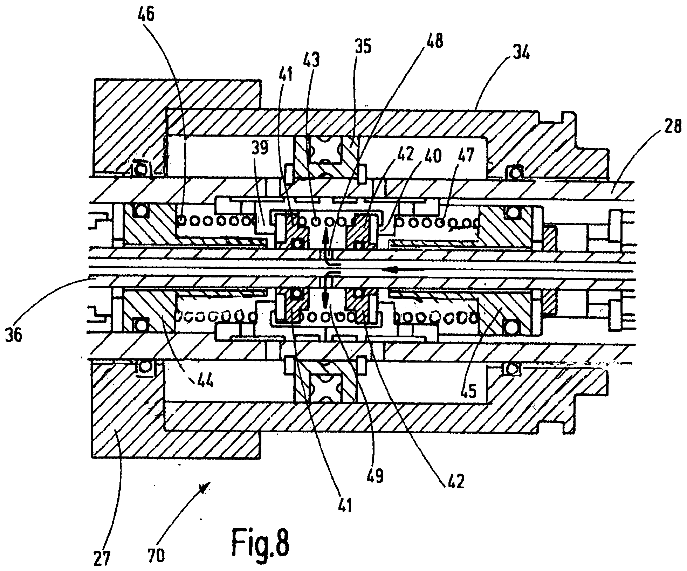

Figures 8 to 10 schematically illustrate the basic design of the power assist servo unit 70. The pneumatically operated unit 70 comprises a cylinder 34 that is sealingly attached to the housing 27 and that sealingly surrounds the shifting rod 28 passing therethrough. A piston 35 that is secured to the outer surface of the shifting rod 28 is sealingly received in the cylinder 34. A pressurized air supply tube 36, coaxial with the actuating rod 31 and connected thereto, extends through the tube-like shifting rod 28 and is connected to a connector fitting 37 for a source 38 (see figure 5) of pressurized air. Attached to the inner surface of the shifting rod 28 are two annular valve seats 39 and 40. Two annular valve members 41 and 42 are sealingly and slidingly mounted on the tube 36 and biased against their respective valve seats 39 or 40 by a compression spring 43 provided therebetween.

Axially outwards of the valve elements 41, 42 two valve-lifting elements (valve lifters) 44, 45 are provided that are sealed against the inner surface of the shifting rod 28 on which they are mounted. They encircle the tube 36, leaving an annular gap between each valve lifter and the outer surface of the tube 36. The valve lifters 44 and 45 are each biased in a direction away from their respective valve seat 39 or 40 by compression springs 46 and 47 that are interposed between the respective valve lifter 44, 45 and its corresponding valve seat 39 and 40, respectively.

In a non-operating arrest condition illustrated in figure 8 the compression spring 43 presses the two valve elements 41 and 42 against their valve seats 39 and 40 thereby preventing pressurized air from escaping from a space 49 that is defined by the valve elements 41, 42, the outer surface of the tube 36 and an inner surface of an cylindrical structure on which the two valve seats 39 and 40 are supported. Pressurized air may enter into this space through ports 48 in the wall of the tube 36 as this is indicated by arrows in figure 8.

In this condition the power assist servo unit 70 is inactive and the actuating rod 31 is directly coupled to the shifting rod 28 as already explained.

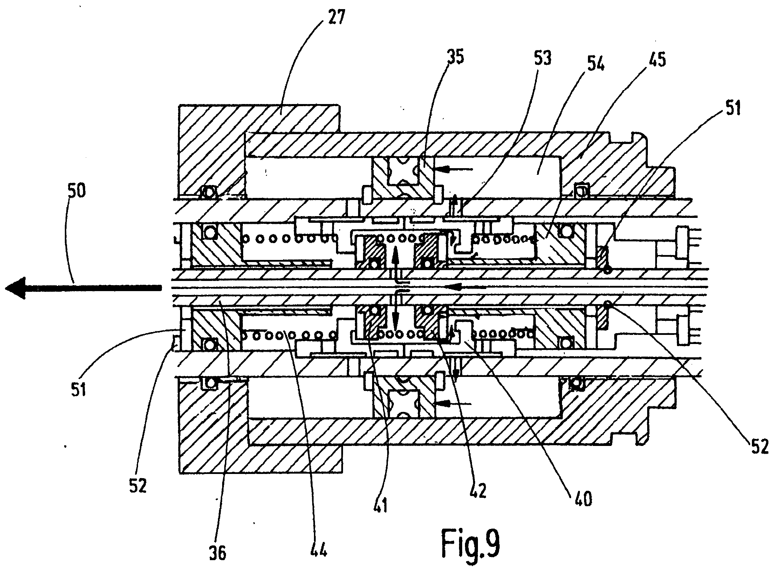

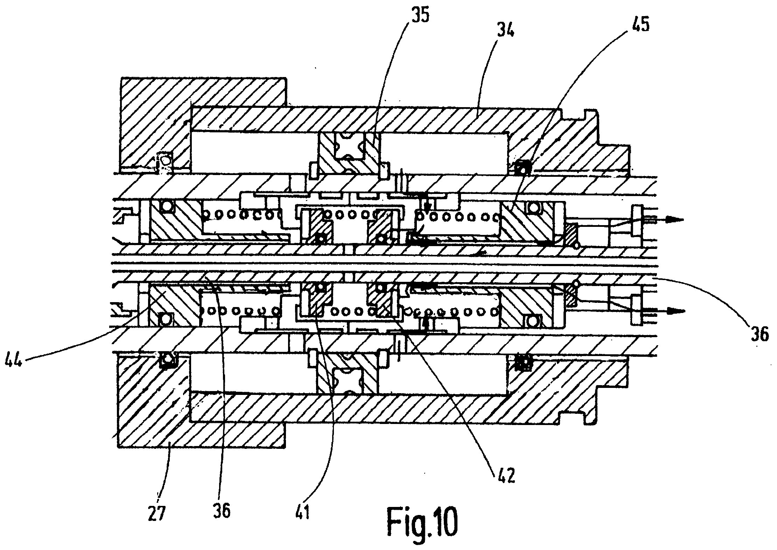

If the resistance against an axial movement of the shifting rod 28 is sufficient to cause an axial displacement of the actuating rod 31 with respect to the shifting rod 28 due to a pulling (or pushing) force exerted by the piston rod 24 (figure 5) on the actuating rod 31, as this is indicated by an arrow 50 in figure 10, the actuating rod 31 moves the tube 36 connected thereto to the left hand side in figure 9, thereby causing the valve lifter 45 to compress the spring 47 and to lift the valve element 42 off its valve seat 40. The movement of the tube 36 is transmitted to the valve lifter 45 through an end plate 51 that is fastened to the tube 36 by means of a circlip 52. Pressurized air can now flow through the ports 48 and over the open gap at the valve seat 40 and further through ports 53 in the wall of the shifting rod 28 into a cylinder chamber 54 on the right hand side of the piston 35 and thereby exert an additional force on the piston 35, as this is indicated by arrows 55 in figure 9. Figure 9 also illustrates the flow path of the pressurized air with little arrows.

When the actuation force exerted on the actuating rod 31 is released after completion of a gear ratio shifting, the actuating rod 31 will return to its initial position in figure 8. As a consequence, the spring 47 can return the valve lifter 45 in its initial position, thereby allowing the spring 43 to sealingly press the valve element 42 against its valve seat 40 and thus sealingly close the space 49. When moving away from the valve element 42, the valve lifter 45 opens a path for the air in the cylinder chamber 54 to escape through the ports 53 and a gap between the inner cylindrical surface of the valve lifter 45 and the outer cylindrical surface of the tube 36. Figure 10 illustrates this condition and the flow path of the air is indicated by arrows.

To move the actuating rod 31 in an axial direction to cause a selected gear ratio to be engaged or disengaged, the actuating rod 31 is connected with the piston rod 24 of the double acting hydraulic cylinder 17 of the shift actuator 8. The mechanical connection between these two elements at an interface 56 is configured as a lock ring connection 71, 71a of which two embodiments are illustrated in figures 11 to 13 and figures 14 to 16, respectively.

Figure 11 shows that detent means 57 are operatively interposed between the piston rod 24 and the actuating rod 31. The detent means 57 comprise a detent body 58 that has a cylindrical portion 59 that is slidingly received in the shifting rod 28 and that is connected to the actuating rod 31 through a coaxial cylindrical projection 60 extending into the tube-like actuating rod 31. The detent body 58 comprises a transverse through bore 61 in which a cylindrical sleeve 62 made of steel is located. In the sleeve 62 two detent balls 63 are slidingly received. Inwards crimped edges 64 of the sleeve 62 prevent the balls 63 from escaping from the sleeve 62. The balls 63 are biased in an outward direction be a spring 65 located in the sleeve 62.

The detent means 57 and the interface 56 are located within a cylindrical adapter housing 66 that is sealingly attached to the housing 27 on one of its sides, and that is connected, through flanges, with the housing 67 of the cylinder 17, on the other one of its two sides. Figure 11 shows that the interface 56 between the actuating rod 31 and the detent body 58 is also located within the adapter housing 66.

On its cylindrical inner surface, the adapter housing 66 is provided with a circumferential groove 67 having, in a cross-sectional view, a partially circular profile adapted to matingly receive the outer spherical surface of the detent balls 63. On both of its sides the groove 67 which, as an alternative, may have any form of an indentation suitable for the purpose, is adjoined by annular ramp-like structures 68 formed on the cylindrical housing wall 69.

In its rest or neutral condition shown in figures 11 and 12, the actuating rod 31 is releasably arrested by the outwards biased detent balls 63 engaging the groove 67. When axially moved from their neutral position shown in figures 11 and 12 in the right hand or left hand direction, the balls 63 will come free of the groove 67, and the actuating rod 31 will be freely moveable by the piston rod 24 over the rest of its operating stroke. When returning into their neutral position, the balls 63 will ride on the ramp-like structures 68 and smoothly be guided into the groove 67 thereby releasably arresting the actuating rod 31.

On its end that is remote from the actuating rod 31, the detent body 58 is formed with an integral cylindrical protrusion or tenon 700 that is coaxial to the actuating rod 31 and that forms part of the lock ring connection 71 at the interface 56. The other part of the lock ring connection 71 is in the form of a cup-like cylindrical element 72 that is connected with the piston rod 24. The piston rod 24 is provided, at its free end, with a radially protruding circumferential shoulder 73 formed on an end portion 74 having a greater diameter than the piston rod 24 of which it is an integral part or to which it is attached. The end portion 74 is received in a cylindrical bore 75 of the cup-shaped element 72 which has a diameter to allow the cup-shaped element 72 to be fitted with close tolerances over the cylindrical tenon 700 of the detent body 58. On its surface, the bore 75 is provided with a circumferential groove 76 that is shaped to receive a circlip 77 that is best shown in figure 13. The circlip 77 is made of spring steel and formed with a slit to allow its insertion into the groove 67 through the bore 75, as this is well known in the art.

On its bottom side, the bore 75 is partially closed by a bottom wall 78 provided with a coaxial through bore to receive the piston rod 24. At one point of its circumference the cup-shaped element 72 is formed with a longitudinal slot 78 that is wide enough to allow the passage of the piston rod 24 when mounting the element 72 on the piston rod 24, but that is narrow enough to prevent the end portion 74 of the piston rod 24 from escaping from the bore 75 when the element 72 is mounted on the piston rod 24 and in a condition as this is shown in figures 11 and 12.

The tenon 700 of the detent body 58 is formed, on its outer cylindrical surface, with a circumferential groove 79 that is configured to receive the flat-sided circlip 77 and to non-releasably arrest the same.

To operatively connect the piston rod 24 with the actuating rod 32, the detent body 58 is fastened to the actuating rod 31. Then the cup-shaped element 72 is mounted on the piston rod 24 and axially moved into the position in figure 12 where the shoulder 73 of its end portion 74 abuts the bottom wall 78 of the bore 75. Now the circlip 77 is inserted into the groove 76 and the cup-shaped element 72 is axially slid onto the tenon 700 until the circlip 77 that is resiliently radially expanded during this axial movement of the cup-shaped element 72, firmly snaps into the groove 79 of the tenon 700. In this condition of the lock ring connection 71 that is illustrated in figure 11, the end portion 74 of the piston rod 24 abuts the end-face of the tenon 700 thereby avoiding an undesirable axial play between the piston rod 24 and the tenon 700 and, as a consequence, the actuating rod 31. Since the outer diameter of the end portion 74 of the piston rod 24 is smaller than the inner diameter of the bore 75, the lock ring connection 71 is tolerant with respect to a certain misalignment between the piston rod 24 and the actuating rod 31 due to manufacturing or assembly tolerances.

The lock ring connection 71 between the piston rod 24 and the tenon 700 of the detent body 58 is inseparable thereby guaranteeing a secure and reliable connection between the piston rod 24 and the actuating rod 31 that cannot be loosened by vibrations or by persons trying to make unauthorized repairs in the case of a failure of the system.

In an alternative embodiment that is not shown in the drawing, the lock ring connection 71 may also be used for a direct connection of the piston rod 24 with the actuating rod 31, with the detent means 57 being omitted or provided at a different location.

Figures 14 to 16 show another embodiment of the lock ring connection 71a between the piston rod 24 and the actuating rod 31. Similar reference numbers, with an "a" added thereto, are used to designate elements that have already been explained in figures 11 to 13.

In this embodiment the lock ring connection 71a is provided with a sleeve-like element 72a preferably made of steel that is axially longer than the cup-shaped element 72 of the figure 11 embodiment. The sleeve-like element 72a is formed, on its outer cylindrical surface, with three circular grooves 67a that are configured to have, in a sectional view, a partially circular profile.

The bore 75a of the sleeve-like element 72a has a circumferential groove 76a formed therein. The groove 76a, seen in a sectional view, has a partially circular profile. The other element of the lock ring connection 71 a is in the form of a cylindrical tenon 700 that is coaxial to and integrally formed with the actuating rod 31. In an alternative embodiment, the tenon 700a may be a separate element that is attached to the actuating rod 31. On its outer surface, the cylindrical tenon 700a is provided with a circumferential groove 79a having, in a cross-sectional view, a partially circular profile adapted to be engaged by a snap ring 77a that is best shown in figure 16. The annular snap-ring 77a is preferably made of spring steel and is slit to allow for its yielding radial compression when the snap-ring 77a is inserted into the groove 76a of the sleeve 72a through the bore 75a that has a smaller inner diameter than the outer diameter of the snap ring 77a.

For connecting the piston rod 24 to the actuating rod 31, the sleeve-like element 72a, with the snap-ring 77a inserted in its groove 76a, is slit over the tenon 700a until the snap ring 77a engages the groove 79a on the tenon 70a. In this condition the end portion 74 of the piston rod 24 abuts the end face of the tenon 700a as this has already been explained in connection with the figure 11 embodiment.

The detent means 57a comprise, in this embodiment, to separate detent elements 80 each of which is in the form of a cup-shaped cylindrical sleeve 81 in which a detent ball 63a is slidingly received and retained by crimped edge portions 64a. The detent balls 63a are outwardly biased by compression springs (not shown in figure 14, 15) that are located within the cup-shaped sleeves 81.

Figures 14, 17 show that the wall 69a of the adapter housing 66a is provided with two coaxial cylindrical through bores 82 into which the detent elements 80 are fitted with their cup-shaped sleeve-like elements 81 being frictionally held or otherwise secured in the bores 82. Clearly, the detent means 57a comprise two separate detent elements 80 that can be assembled and disassembled from the outside of the adapter housing 66a, preferably subsequent to the assembly of the lock ring connection 71a.

The shifting rod 28 is, in this embodiment, provided with longitudinal slots 83 in its walls to allow an unimpaired passage of the detent elements 80.

In another embodiment that is not illustrated in the drawing, the adapter housing 66a may be omitted and the interface 71a may be located within the cylinder housing 67 or the adjacent housing 27.

## Claims

1. A gear shifting system for a change gear transmission (1) having means for engaging and disengaging a selected gear ratio
said gear shifting system comprising:
- means (6,16,18,21) for selecting a gear ratio and means (7,8,19,21) for activating said gear shifting means to engage or disengage a selected gear ratio;
- a shift shaft (10) having a longitudinal axis (11) and supported in supporting means (9) to be shiftable in an axial direction and rotatable around its longitudinal axis;
- operating means (14) secured to said shift shaft and adapted to control said means for engaging or disengaging a selected gear ratio in response to rotational movement of said gear shaft (10),
- first actuator means (6) operatively coupled to said shift shaft to shift the same in axial direction to select a gear ratio to be engaged or disengaged;
- second actuator means (7) operatively coupled to said shift shaft (10) to rotate the same around its longitudinal axis to engage or disengage a selected gear ratio;
- said second actuator means including remotely controlled shift actuator means (8) connected to an actuating rod (31)having a longitudinal axis and slidingly received in a tube-like shifting rod (28);
- a fluid operated power assist servo unit (70) operatively interposed between said actuator rod (31) and said shifting rod to exert an amplified axially directed actuating force on said shifting rod (28) in response to an axially directed actuating force exerted on said actuating rod by said shift actuator means (8), said shifting rod (28) being coupled with said shift shaft (10) to rotate the same around its longitudinal axis (11) in response to an axial movement of said shifting rod;
- a housing (27) enclosing said power assist servo unit (70) and means for supporting said shifting rod and said actuating rod within said housing; wherein
- said shift actuator means (8) are associated with said housing (27) and said gear system being **characterised in that**:
- said actuator rod (31) is non-releasably operatively connected with said shift actuator means (8).

2. The system according to claim 1 wherein said second actuator means (7) comprises a detent means (57) to releasably arrest the actuating rod (31) in a predetermined position with respect to said housing (27).

3. The system according to claim 2 wherein said detent means (57)is interposed between the shift actuator means (8) and the actuating rod (31).

4. The system according to claim 2 or 3 wherein the detent means (57)is located within said housing (27).

5. The system according to claim 2 or 3 wherein said detent means (57) is located in an adaptor housing (66) that is secured to the housing (27) enclosing the power assist servo unit (70) and to the shift actuator means (8).

6. The system according to claim 4 or 5 wherein the detent means (57a) comprises at least a detent element (63a) that is moveably mounted in a housing wall (69a) surrounding at least an interface (71a) between the shift actuator means (8) and the actuator rod (31) and that is resiliently biased toward engagement with a detent (67a) on the actuating rod (71) or on a part (72a) connected therewith.

7. The system according to claim 6 wherein the detent element (63a) is at least partially spherical and biased by a spring, the detent element and the spring being enclosed in a detent housing (81) that is mounted in said housing wall.

8. The system according to claim 4 or 5 wherein the detent means (37) comprises a detent body (58) that is connected with the actuating rod (31) and on which at least one resiliently radially outwards biased detent element (63) is moveably supported to engage a detent (67) that is provided on a housing wall (69) surrounding the detent body (58).

9. The system according to claim 8 wherein the detent comprises a radial indentation (67) in the surrounding housing wall axially adjoined on both sides by ramp-like structures (68) on the housing wall.

10. The system according to claim 1 wherein the actuator rod (31) is connected with the shift actuator means through a non-releasable lock ring connection (71,71a).

11. The system according to claim 10 wherein the lock ring connection comprises a tenon- like element (700) and a cup- or sleeve-shaped element (72) configured to fit over the tenon-like element and a radially deformable resilient circlip (77) received in a circumferential groove means in one of said elements and non-releasably engaging a groove means on the other of said elements (72,700) when said tenon-like element is inserted into said sleeve-shaped element.

12. The system according to claim 11 wherein said sleeve-shaped element is provided with a longitudinal slit (28) extending over at least part of its length.

13. The system according to claims 2 and 10 wherein said lock ring connection (71,71a) is provided between the shift actuator means (8) and a part of the detent means that is connected with the actuator rod (81).

14. The system according to claims 8 and 13 wherein said body (58) of the detent means is provided with a tenon-like element (700) of the lock ring connection.

15. The system according to claims 8 and 13 wherein the cup- or sleeve-shaped element of the lock ring connection comprises the actuating rod (31) or a part attached and tenon-like element (700a) thereto, the cup- or sleeve-like element (72a) being fitted over and non-releasably secured to said tenon-like element (700a) and wherein at least one detent (67a) is provided on an outer surface of the cup- or sleeve-like element (72a).

16. The system according to claim 15 wherein the detent means comprise at least one detent element (63a,80) that is mounted in a housing wall (69a) from the outside of said wall.

17. The system according to claim 1 wherein the shift actuator (8) means comprises a double acting fluid cylinder (17) having a piston rod (24) that is non-releasably connected with the actuator rod (31) or with a part connected therewith.

18. The system according to claim 17 wherein the piston rod (24), on a free end, is provided with a radially protruding flange-like portion (74) configured to abut a bottom wall portion of the cup-shaped element (72,72a) of the lock ring connection (71;71a).

19. The system according to claim 1 wherein the first actuator means (6) and the shift actuator means (8) of the second actuator means (7) each include a fluid cylinder (16;17) and wherein said cylinders are controlled by a remote fluid control unit (20) comprising gear ratio change selector means (21;22).

## Patentansprüche

1. Gangschaltungssystem für ein Gangwechselgetriebe (1) mit Mitteln zum Einlegen und Lösen einer ausgewählten Übersetzung,
das Gangschaltungssystem umfassend:
- Mittel (6, 16, 18, 21) zum Auswählen einer Übersetzung und Mittel (7, 8, 19, 21) zum Aktivieren der Gangschaltungsmittel, um eine ausgewählte Übersetzung einzulegen oder zu lösen;
- eine Schaltwelle (10) mit einer Längsachse (11) und in Stützmitteln (9) gestützt, um in einer Achsrichtung schaltbar und um ihre Längsachse drehbar zu sein;
- Betriebsmittel (14), die an der Schaltwelle gesichert und angepasst sind, die Mittel zum Einlegen oder Lösen einer ausgewählten Übersetzung in Antwort auf eine Drehbewegung der Schaltwelle (10) zu steuern,
- erste Betätigungsmittel (6), die betriebsfähig mit der Schaltwelle gekoppelt sind, um diese in einer Achsrichtung zu schalten, um eine Übersetzung, die einzulegen oder zu lösen ist, auszuwählen;
- zweite Betätigungsmittel (7), die betriebsfähig mit der Schaltwelle (10) gekoppelt sind, um diese um ihre Längsachse zu drehen, um eine ausgewählte Übersetzung einzulegen oder zu lösen;
- wobei die zweiten Betätigungsmittel ferngesteuerte Schaltbetätigungsmittel (8) enthalten, die mit einer Betätigungsstange (31), die eine Längsachse hat, verbunden sind und schiebbar in einer röhrenähnlichen Schaltstange (28) aufgenommen sind;
- eine fluidbetriebene Kraftverstärkereinheit (70), die betriebsfähig zwischen der Betätigungsstange (31) und der Schaltstange eingesetzt ist, um in Antwort auf eine achsgerichtete Betätigungskraft, die durch die Schaltbetätigungsmittel (8) auf die Betätigungsstange ausgeübt wird, eine verstärkte achsgerichtete Betätigungskraft auf die Schaltstange (28) auszuüben, wobei die Schaltstange (28) mit der Schaltwelle (10) gekoppelt ist, um diese in Antwort auf eine Axialbewegung der Schaltstange um ihre Längsachse (11) zu drehen;
- Gehäuse (27), das die Kraftverstärkereinheit (70) einschließt, und Mittel zum Stützen der Schaltstange und der Betätigungsstange innerhalb des Gehäuses; wobei
- die Schaltbetätigungsmittel (8) dem Gehäuse (27) zugehörig sind und
das Gangsystem **dadurch gekennzeichnet ist, dass**:
- die Betätigungsstange (31) mit den Schaltbetätigungsmitteln (8) unlösbar betriebsfähig verbunden ist.

2. System nach Anspruch 1, wobei das zweite Betätigungsmittel (7) ein Arretierungsmittel (57) umfasst, um die Betätigungsstange (31) in einer vorbestimmten Position in Bezug auf das Gehäuse (27) lösbar zu arretieren.

3. System nach Anspruch 2, wobei das Arretierungsmittel (57) zwischen dem Schaltbetätigungsmittel (8) und der Betätigungsstange (31) eingesetzt ist.

4. System nach Anspruch 2 oder 3, wobei das Arretierungsmittel (57) innerhalb des Gehäuses (27) gelegen ist.

5. System nach Anspruch 2 oder 3, wobei das Arretierungsmittel (57) in einem Adaptergehäuse (66) gelegen ist, das am Gehäuse (27), das die Kraftverstärkereinheit (70) einschließt, und am Schaltbetätigungsmittel (8) gesichert ist.

6. System nach Anspruch 4 oder 5, wobei das Arretierungsmittel (57a) zumindest ein Arretierungselement (63a) umfasst, das beweglich in einer Gehäusewand (69a), die zumindest eine Grenzfläche (71a) zwischen dem Schaltbetätigungsmittel (8) und der Betätigungsstange (31) umgibt, montiert ist und das elastisch zu einem Eingriff mit einer Arretierung (67a) auf der Betätigungsstange (71) oder auf einem damit verbundenen Teil (72a) vorgespannt ist.

7. System nach Anspruch 6, wobei das Arretierungselement (63a) zumindest teilweise sphärisch und durch eine Feder vorgespannt ist, wobei das Arretierungselement und die Feder in einem Arretierungsgehäuse (81), das in der Gehäusewand montiert ist, eingeschlossen sind.

8. System nach Anspruch 4 oder 5, wobei das Arretierungsmittel (37) einen Arretierungskörper (58) umfasst, der mit der Betätigungsstange (31) verbunden ist und auf dem zumindest ein elastisch radial nach außen vorgespanntes Arretierungselement (63) beweglich gestützt ist, um mit einer Arretierung (67) in Eingriff zu gelangen, die auf einer Gehäusewand (69) bereitgestellt ist, die den Arretierungskörper (58) umgibt.

9. System nach Anspruch 8, wobei die Arretierung eine radiale Einkerbung (67) in der umgebenden Gehäusewand umfasst, an welche axial an beiden Seiten rampenähnliche Strukturen (68) auf der Gehäusewand angrenzen.

10. System nach Anspruch 1, wobei die Betätigungsstange (31) mit dem Schaltbetätigungsmittel durch eine unlösbare Sperrringverbindung (71, 71a) verbunden ist.

11. System nach Anspruch 10, wobei die Sperrringverbindung ein zapfenähnliches Element (700) und ein becher- oder hülsenförmiges Element (72), das konfiguriert ist, über das zapfenähnliche Element zu passen, und einen radial verformbaren elastischen Seeger-Ring (77) umfasst, der in einem umlaufenden Kerbenmittel in einem der Elemente aufgenommen wird und unlösbar mit einem Kerbenmittel auf dem anderen der Elemente (72, 700) in Eingriff gelangt, wenn das zapfenähnliche Element in das hülsenförmige Element eingesetzt wird,.

12. System nach Anspruch 11, wobei das hülsenförmige Element mit einem Längsschlitz (28) bereitgestellt ist, der sich über zumindest einen Teil seiner Länge erstreckt.

13. System nach Ansprüchen 2 und 10, wobei die Sperrringverbindung (71, 71a) zwischen dem Schaltbetätigungsmittel (8) und einem Teil des Arretierungsmittels, der mit der Betätigungsstange (81) verbunden ist, bereitgestellt ist.

14. System nach Ansprüchen 8 und 13, wobei der Körper (58) des Arretierungsmittels mit einem zapfenähnlichen Element (700) der Sperrringverbindung bereitgestellt ist.

15. System nach Ansprüchen 8 und 13, wobei das becher- oder hülsenförmige Element der Sperrringverbindung die Betätigungsstange (31) oder einen daran befestigten Teil und zapfenähnliches Element (700a) umfasst, wobei das becher- oder hülsenähnliche Element (72a) über das zapfenähnliche Element (700a) gesetzt und unlösbar daran gesichert ist, und wobei zumindest eine Arretierung (67a) auf einer Außenfläche des becher- oder hülsenähnlichen Elements (72a) bereitgestellt ist.

16. System nach Anspruch 15, wobei die Arretierungsmittel zumindest ein Arretierungselement (63a, 80) umfassen, das in einer Gehäusewand (69a) von der Außenseite der Wand montiert ist.

17. System nach Anspruch 1, wobei das Schaltbetätigungs-(8)-mittel einen doppelwirkenden Fluidzylinder (17) mit einer Kolbenstange (24), die unlösbar mit der Betätigungsstange (31) oder mit einem damit verbundenen Teil verbunden ist, umfasst.

18. System nach Anspruch 17, wobei die Kolbenstange (24) an einem freien Ende mit einem radial hervorstehenden flanschähnlichen Abschnitt (74) bereitgestellt ist, der konfiguriert ist, an einem Bodenwandabschnitt des becherförmigen Elements (72, 72a) der Sperrringverbindung (71; 71a) anzuliegen.

19. System nach Anspruch 1, wobei das erste Betätigungsmittel (6) und das Schaltbetätigungsmittel (8) des zweiten Betätigungsmittels (7) jeweils einen Fluidzylinder (16; 17) enthalten und wobei die Zylinder durch eine Fluidfernsteuereinheit (20) gesteuert sind, die Übersetzungswechselauswahlmittel (21; 22) umfasst.

## Revendications

1. Système de changement de vitesse pour une transmission à changement de vitesse (1) ayant des moyens pour enclencher et désenclencher un rapport d'engrenage sélectionné
ledit système de changement de vitesse comprenant :
- des moyens (6, 16, 18, 21) pour sélectionner un rapport d'engrenage et des moyens (7, 8, 19, 21) pour activer ledit moyen de changement de vitesse afin d'enclencher ou de désenclencher un rapport d'engrenage sélectionné ;
- un arbre de transmission (10) ayant un axe longitudinal (11) et supporté dans un moyen de support (9) pour pouvoir être changé dans une direction axiale et pouvant tourner autour de son axe longitudinal ;
- des moyens opérationnels (14) fixés audit arbre de transmission et conçus pour commander lesdits moyens pour enclencher ou désenclencher un rapport d'engrenage sélectionné en réponse à un mouvement rotatif dudit arbre de transmission (10),
- des premiers moyens actionneurs (6) opérationnellement raccordés audit arbre de transmission pour le déplacer dans une direction axiale afin de sélectionner un rapport d'engrenage à enclencher ou désenclencher ;
- des seconds moyens actionneurs (7) opérationnellement raccordés audit arbre de transmission (10) afin de le faire tourner autour de son axe longitudinal pour enclencher ou désenclencher un rapport d'engrenage sélectionné ;
- lesdits seconds moyens actionneurs incluant des moyens actionneurs de changement commandés à distance (8) raccordés à une tige d'actionnement (31) ayant un axe longitudinal et reçus en coulissement dans une tringle de changement de vitesse tubulaire (28) ;
- une unité de servocommande assistée actionnée par un fluide (70) opérationnellement interposée entre ladite tige d'actionneur (31) et ladite tringle de changement de vitesse, pour exercer une force d'actionnement dirigée axialement amplifiée sur ladite tringle de changement de vitesse (28) en réponse à une force d'actionnement dirigée axialement exercée sur ladite tige d'actionnement par lesdits moyens d'actionneur de changement (8), ladite tringle de changement de vitesse (28) étant raccordée audit arbre de transmission (10) pour le faire tourner autour de son axe longitudinal (11) en réponse à un mouvement axial de ladite tringle de changement de vitesse ;
- un logement (27) comprenant ladite unité de servocommande assistée (70) et des moyens pour supporter ladite tringle de changement de vitesse et ladite tige d'actionnement dans ledit logement ; dans lequel
- lesdits moyens actionneurs de changement (8) sont associés audit logement (27) et
ledit système d'engrenage étant **caractérisé en ce que** :
- ladite tige d'actionneur (31) est raccordée opérationnellement de manière non libérable auxdits moyens actionneurs de changement (8).

2. Système selon la revendication 1, dans lequel lesdits seconds moyens actionneurs (7) comprennent un moyen d'encliquetage (57) pour arrêter de manière libérable la tige d'actionnement (31) dans une position prédéterminée relativement audit logement (27).

3. Système selon la revendication 2, dans lequel lesdits moyens d'encliquetage (57) sont interposés entre les moyens actionneurs de changement (8) et la tige d'actionnement (31).

4. Système selon la revendication 2 ou 3, dans lequel les moyens d'encliquetage (57) sont situés dans ledit logement (27).

5. Système selon la revendication 2 ou 3, dans lequel lesdits moyens d'encliquetage (57) sont situés dans un logement d'adaptateur (66) qui est fixé au logement (27) et qui comprend l'unité de servocommande assistée (70) et aux moyens d'actionneur de changement (8).

6. Système selon la revendication 4 ou 5, dans lequel les moyens d'encliquetage (57a) comprennent au moins un élément d'encliquetage (63a) qui est monté de manière mobile dans une paroi de logement (69a) entourant au moins une interface (71a) entre les moyens actionneurs de changement (8) et la tige d'actionneur (31) et qui est incliné de manière résiliente vers la mise en prise avec un cran (67a) sur la tige d'actionnement (71) ou sur une partie (72a) connectée à celle-ci.

7. Système selon la revendication 6, dans lequel l'élément d'encliquetage (63a) est au moins partiellement sphérique et incliné par un ressort, l'élément d'encliquetage et le ressort étant insérés dans un logement d'encliquetage (81) qui est monté dans ladite paroi de logement.

8. Système selon la revendication 4 ou 5, dans lequel les moyens d'encliquetage (37) comprennent un corps d'encliquetage (58) qui est connecté à la tige d'actionnement (31) et sur lequel au moins un élément d'encliquetage incliné vers l'extérieur radialement de manière résiliente (63) est supporté de manière mobile pour mettre en prise un cran (67) qui est ménagé sur une paroi de logement (69) entourant le corps d'encliquetage (58).

9. Système selon la revendication 8, dans lequel le cran comprend une indentation radiale (67) dans la paroi de logement environnante jointe axialement des deux côtés par des structures semblables à des rampes (68) sur la paroi de logement.

10. Système selon la revendication 1, dans lequel la tige d'actionneur (31) est raccordée aux moyens actionneurs de changement par le biais d'un raccord à bague de verrouillage non libérable (71, 71a).

11. Système selon la revendication 10, dans lequel le raccord à bague de verrouillage comprend un élément semblable à un tenon (700) et un élément creux ou en forme de manchon (72) configuré pour s'adapter sur l'élément semblable à un tenon et un circlip résilient déformable radialement (77) reçu dans un moyen de cannelure circonférentiel dans l'un desdits éléments et mettant en prise de manière non libérable un moyen de cannelure sur l'autre desdits éléments (72, 700) quand ledit élément semblable à un tenon est inséré dans ledit élément en forme de manchon.

12. Système selon la revendication 11, dans lequel ledit élément en forme de manchon est doté d'une fente longitudinale (28) s'étendant sur au moins une partie de sa longueur.

13. Système selon les revendications 2 et 10, dans lequel ledit raccord à bague de verrouillage (71, 71a) est ménagé entre les moyens actionneurs de changement (8) et une partie des moyens d'encliquetage qui est raccordée à la tige d'actionneur (81).

14. Système selon les revendications 8 et 13, dans lequel ledit corps (58) des moyens d'encliquetage est doté d'un élément semblable à un tenon (700) du raccord à bague de verrouillage.

15. Système selon les revendications 8 et 13, dans lequel l'élément creux ou en forme de manchon du raccord à bague de verrouillage comprend la tige d'actionnement (31) ou une partie fixée et un élément semblable à un tenon (700a) sur celui-ci, l'élément creux ou en forme de manchon (72a) étant adapté sur et fixé de manière non libérable audit élément semblable à un tenon (700a) et dans lequel au moins un cran (67a) est ménagé sur une surface extérieure de l'élément creux ou semblable à un manchon (72a).

16. Système selon la revendication 15, dans lequel les moyens d'encliquetage comprennent au moins un élément d'encliquetage (63a, 80) qui est monté dans une paroi de logement (69a) depuis l'extérieur de ladite paroi.

17. Système selon la revendication 1, dans lequel les moyens actionneurs de changement (8) comprennent un cylindre à fluide à double action (17) ayant une tige de piston (24) qui est raccordée de manière non libérable à la tige d'actionneur (31) ou à une partie raccordée à celle-ci.

18. Système selon la revendication 17, dans lequel la tige de piston (24), à une extrémité libre, est dotée d'une partie semblable à une bride saillant radialement (74) configurée pour venir en butée sur une partie de paroi inférieure de l'élément creux (72, 72a) du raccord à bague de verrouillage (71, 71a).

19. Système selon la revendication 1, dans lequel les premiers moyens actionneurs (6) et les moyens actionneurs de changement (8) des seconds moyens actionneurs (7) comprennent chacun un cylindre à fluide (16 ; 17) et dans lequel lesdits cylindres sont commandés par une unité de commande à fluide distante (20) comprenant des moyens de sélecteur de changement de rapport d'engrenage (21 ; 22).
